(19) Europäisches Patentamt
European Patent Office
Office européen des brevets

(11) **EP 2 098 830 A1**

(12) **EUROPEAN PATENT APPLICATION**
published in accordance with Art. 153(4) EPC

(43) Date of publication:
**09.09.2009 Bulletin 2009/37**

(51) Int Cl.:
***G01D 5/38*** *(2006.01)*

(21) Application number: **07831432.5**

(22) Date of filing: **08.11.2007**

(86) International application number:
**PCT/JP2007/071701**

(87) International publication number:
**WO 2008/059748 (22.05.2008 Gazette 2008/21)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **14.11.2006 JP 2006307842**

(71) Applicant: **Nikon Corporation
Tokyo 100-8331 (JP)**

(72) Inventors:
• **MAKINOUCHI, Susumu
Tokyo 100-8331 (JP)**
• **IMAI, Toru
Tokyo 100-8331 (JP)**
• **WATANABE, Akihiro
Tokyo 100-8331 (JP)**

(74) Representative: **Viering, Jentschura & Partner
Grillparzerstrasse 14
81675 München (DE)**

(54) **ENCODER**

(57) The present invention performs calculations on photoelectric conversion signals ($I_a$, $I_b$, $I_c$, $I_d$) supplied from a light receiving device (26) and calculates two signals ($I_A$, $I_B$) as a result. Furthermore, the signal ($I_{AB}$) is generated based on the signals ($I_A$, $I_B$), and the signal ($I_{AB}$) is output from the encoder (10). As shown in equation, the term in the signal ($I_{AB}$) that depends on the time t is $4d \cdot \sin(\omega t)$. Moreover, as shown in equations (5) and (6), the term that depends on the time t in the signals ($I_A$, $I_B$) is $2d \cdot \sin(\omega t)$; consequently, the signal ($I_{AB}$) varies with respect to the signals ($I_A$, $I_B$) on a scale substantially tantamount to doubling the degree of modulation. Accordingly, if the position of the movable scale (24) is detected based on the signal ($I_{AB}$), then that position can be detected with good accuracy on a scale tantamount to doubling the degree of modulation.

Fig. 1

**Description**

**TECHNICAL FIELD**

The present invention relates to an encoder and more particularly relates to an encoder that optically detects the position of a moving body.

**BACKGROUND ART**

Scanning type encoders perform a process (hereinbelow, simply called a detection process) wherein a light receiving device receives illumination light that travels through a movable scale, two or more signals of different phases are generated from an output signal that is output from the light receiving device, and the position of the movable scale is detected based on these phase signals (e.g., refer to Patent Citation 1).

To improve the accuracy of detecting the position using this detection process, the resolving power of the encoder could be improved by increasing the fineness of the patterns provided to the movable scale. That said, increasing the fineness of the patterns is a problem because the performance of the scanner, which modulates the illumination light, is not sufficient to track finer patterns. In addition, improving the measurement accuracy of the encoder also necessitates effectively eliminating any distortion contained in the output signal.

Patent Citation 1: U.S. Patent No. 6,639,686

**DISCLOSURE OF INVENTION**

**MEANS FOR SOLVING THE PROBLEMS**

The present invention is a photoelectric type encoder that detects positional information of a moving body using the interference of an illumination light emitted from a light source, comprising: a scale that is fixed to the moving body and has a pattern arrayed in the movement directions of the moving body; an optical system that radiates the illumination light to the scale and generates an emergent light that includes at least two different pieces of phase information; a signal generation apparatus that receives the emergent light and generates signals corresponding to the phase information; and an output apparatus that outputs the positional information regarding the moving body based on the signals generated by the signal generation apparatus.

According to the present aspect, the signal generation circuit generates signals (i.e., phase signals), which correspond to pieces of phase information, based on emergent light that includes at least different two pieces of phase information. Furthermore, the output apparatus generates and outputs positional information regarding the moving body based on the phase signals. Accordingly, by performing a prescribed process on each of the phase signals, it is possible to obtain substantially the same effect as when the degree of modulation of the illumination light is increased.

**BRIEF DESCRIPTION OF THE DRAWINGS**

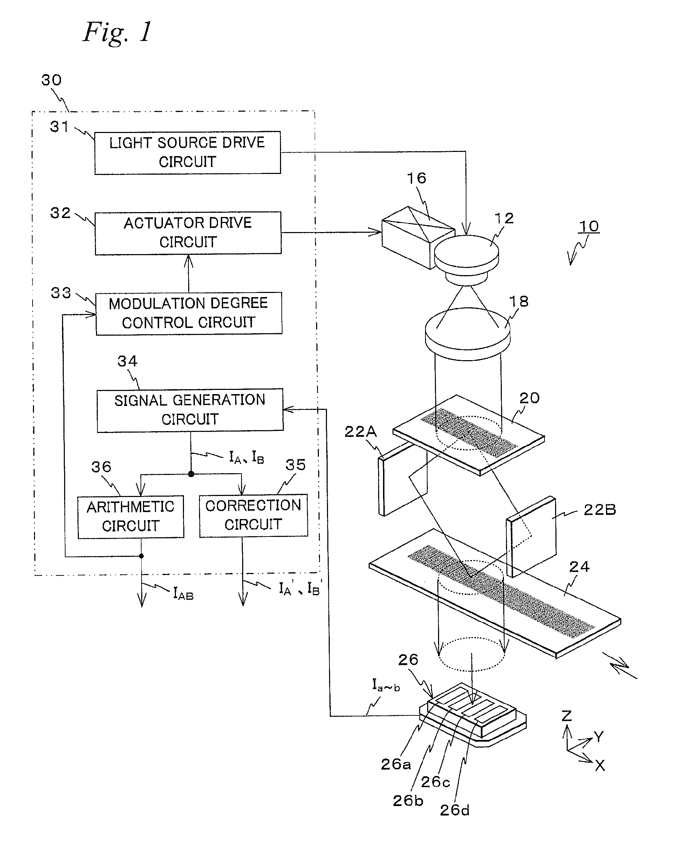

FIG. 1 schematically shows the configuration of an encoder according to one embodiment of the present invention.

**BEST MODE FOR CARRYING OUT THE INVENTION**

One embodiment of the present invention will now be explained, referencing FIG. 1.

FIG. 1 shows a schematic configuration of an encoder 10 according to one embodiment of the present invention. As shown in FIG. 1, the encoder 10, which is a so-called diffraction interference type encoder, is a linear encoder that detects the direction of movement, the amount of movement, or the displacement of a moving body that moves in prescribed directions (i.e., the X axial directions).

As shown in FIG. 1, the encoder 10 comprises a light source 12, an actuator 16, a collimating lens 18, an index scale 20, a pair of reflecting mirrors 22A, 22B, a movable scale 24, a light receiving device 26, and a control circuit 30.

In FIG. 1, the light source 12 emits coherent light, for example, a laser beam with a wavelength $\lambda(= 850$ nm), in the -Z direction.

The actuator 16 comprises, for example, a piezoelectric device and is disposed on the -X side of the light source 12. The actuator 16 periodically vibrates the light source 12 in the X axial directions, based on a drive signal that is supplied from the control circuit 30. In the present embodiment, the actuator 16, through the cooperation of a modulation degree control circuit 33 and an actuator control circuit 32 (discussed below), vibrates with a modulation amplitude $\varepsilon$

(half amplitude $\varepsilon/2$), a degree of modulation d ($=\pi\cdot\varepsilon/p$), and a modulation angular frequency $\omega$.

The collimating lens 18 is disposed below the light source 12 and shapes the illumination light, which is emitted from the light source 12, into light with parallel rays.

The index scale 20 is disposed below the collimating lens 18. The index scale 20 is a transmitting type phase grating in which is formed a diffraction grating whose directions of periodicity are oriented in the X axial directions. Furthermore, when the illumination light that transmits through the collimating lens 18 enters, a plurality of diffracted lights is generated. FIG. 1 shows the $\pm1$st order diffracted lights of those diffracted lights generated by the index scale 20. Furthermore, in FIG. 1, the diffracted light generated on the +X side is the +1st order diffracted light, and the diffracted light generated on the -X side is the -1st order diffracted light.

The reflecting mirrors 22A, 22B are disposed below the index scale 20 such that they oppose one another at positions spaced apart from the optical axis of the collimating lens 18 by a prescribed distance in the -X direction and a prescribed distance in the +X direction, respectively. The reflecting mirrors 22A, 22B deflect the -1st order diffracted light and the +1st order diffracted light generated by the index scale 20 such that they travel toward the movable scale 24. Thereby, the $\pm1$st order diffracted lights generated by the index scale 20 enter the movable scale 24 such that they overlap one another at least partially.

The movable scale 24 is disposed below the reflecting mirrors 22A, 22B and is capable of moving in the X axial directions. The movable scale 24 is a transmitting type phase grating in which is formed a diffraction grating whose directions of periodicity are oriented in the X axial directions. In addition, a grating pitch p of the diffraction grating formed in the movable scale 24 deviates slightly from the grating pitch of the diffraction grating formed in the index scale 20. Furthermore, the +1st order diffracted light and the -1st order diffracted light generated by the index scale 20 are received by the movable scale 24 and enter the light receiving device 26 such that they interfere with one another.

The light receiving device 26 is disposed below the movable scale 24. The light receiving device 26 comprises four light receiving parts 26a, 26b, 26c, 26d, which are provided such that they are matched to the interference fringes formed by the interference of the illumination light that travels through the movable scale 24. Furthermore, photoelectric conversion signals $I_a$, $I_b$, $I_c$, $I_d$ are output in accordance with the intensities of the illumination light that enter the light receiving parts 26a-26d, respectively. These photoelectric conversion signals $I_a$-$I_d$ are expressed by equations (1)-(4) below, taking into account the vibrations of the actuator 16 discussed above. Furthermore, x is the displacement of the movable scale 24 with respect to the index scale 20.

$$I_a = 1 + \cos[4\pi x/p - 2d\cdot\sin(\omega t)] \quad (1)$$

$$I_b = 1 + \sin[4\pi x/p - 2d\cdot\sin(\omega t)] \quad (2)$$

$$I_c = 1 - \cos[4\pi x/p - 2d\cdot\sin(\omega t)] \quad (3)$$

$$I_d = 1 - \sin[4\pi x/p - 2d\cdot\sin(\omega t)] \quad (4)$$

The control circuit 30 comprises a light source drive circuit 31, the actuator drive circuit 32, the modulation degree control circuit 33, a signal generation circuit 34, a correction circuit 35, and an arithmetic circuit 36.

The light source drive circuit 31 drives the light source 12 such that the intensity of the illumination light is fixed.

When the signal generation circuit 34 receives the photoelectric conversion signals $I_a$-$I_d$ supplied from the light receiving device 26, the signal generation circuit 34 generates a signal $I_A$ by subtracting the photoelectric conversion signal $I_c$ from the photoelectric conversion signal $I_a$, which have a phase difference of 180°, as expressed in equation (5) below. In addition, the signal generation circuit 34 generates a signal $I_B$ by subtracting the photoelectric conversion signal $I_d$ from the photoelectric conversion signal $I_b$, which have a phase difference of 180°, as expressed in equation (6) below. These signals $I_A$, $I_B$ are output to both the correction circuit 35 and the arithmetic circuit 36.

$$I_A = I_a - I_c = 2\cos[4\pi x/p - 2d\cdot\sin(\omega t)] \quad (5)$$

$$I_B = I_b - I_d = 2\sin[4\pi x/p - 2d\cdot\sin(\omega t)] \qquad (6)$$

The arithmetic circuit 36 generates a signal $I_{AB}$ by multiplying the signal $I_A$ by the signal $I_B$. If we let $4\pi x/p - 2d\cdot\sin(\omega t)$ be $\varphi$ in the abovementioned equations (5), (6), then the signals $I_A$, $I_B$ are expressed as $2\cos(\varphi)$ and $2\sin(\varphi)$. Furthermore, if we multiply the signal $I_A$ by the signal $I_B$, we get the signal $I_{AB}$ shown in equation (7) below. When the arithmetic circuit 36 has calculated the signal $I_{AB}$, it externally outputs the signal $I_{AB}$, which serves as the positional information of the movable scale 24, to the modulation degree control circuit 33.

$$I_{AB} = I_A \times I_B = 4\sin\varphi\cdot\cos\varphi = 2\sin(2\varphi)$$
$$= 2\sin[8\pi x/p - 4d\cdot\sin(\omega t)] \qquad (7)$$

In one example, the modulation degree control circuit 33 generates a modulated signal ($k2\cdot\sin\omega t$), which is a sine wave, based on a clock signal CL ($= k1\cdot\sin\omega t$) of the angular frequency $\omega$. Furthermore, based on this modulated signal, the modulation degree control circuit 33 vibrates the actuator 16 via the actuator drive circuit 32 based on the modulation amplitude $\varepsilon$ (half amplitude $\varepsilon/2$), degree of modulation d ($= \pi\cdot\varepsilon/p$), and modulation angular frequency $\omega$. Thereby, the illumination light emitted from the light source 12 is modulated and the photoelectric conversion signals $I_a$, $I_b$, $I_c$, $I_d$, the phases of which are shifted from one signal to the next by 90° as expressed in the abovementioned equations (1)-(4), are output from the light receiving device 26.

In addition, the modulation degree control circuit 33 continuously monitors the signal $I_{AB}$, which is supplied from the arithmetic circuit 36, and performs control such that the modulation amplitude $\varepsilon$, which is based on the value of the signal $I_{AB}$, reaches a magnitude greater than or equal to half of the grating pitch p (i.e., p/2) of the movable scale 24. Thereby, it is possible to display on a monitor a Lissajous figure with a period of greater than or equal to a half period of the signal $I_A$ and the signal $I_B$.

The correction circuit 35 displays the signal $I_A$ and the signal $I_B$ as the Lissajous figure on the monitor, corrects phase shifting and distortion of the signal $I_A$ and the signal $I_B$, and then outputs the corrected signals $I_A'$, $I_B'$ as the positional information of the movable scale 24.

As explained above, in the encoder 10 according to the present embodiment, the signal generation circuit 34 performs calculations on the photoelectric conversion signals $I_a$, $I_b$, $I_c$, $I_d$ supplied from the light receiving device 26 and generates two signals $I_A$, $I_B$ as a result. Furthermore, the arithmetic circuit 36 generates the signal $I_{AB}$ based on the signals $I_A$, $I_B$, and outputs the signal $I_{AB}$ from the encoder 10. As shown in the abovementioned equation (7), the term that depends on the time t in the signal $I_{AB}$ is $4d\cdot\sin(\omega t)$. Moreover, as shown in the abovementioned equations (5), (6), the term that depends on the time t in the signals $I_A$, $I_B$ is $2d\cdot\sin(\omega t)$. Consequently, the signal $I_{AB}$ varies with respect to the signals $I_A$, $I_B$ on a scale substantially tantamount to doubling the degree of modulation d. Accordingly, if the position of the movable scale 24 is detected based on the signal $I_{AB}$, then that position can be detected with fine accuracy on a scale tantamount to doubling the degree of modulation d.

In addition, in the encoder 10 according to the present embodiment, the modulation degree control circuit 33 performs control based on the signal $I_{AB}$ supplied from the arithmetic circuit 36 such that the magnitude of the modulation amplitude $\varepsilon$ of the actuator 16 is greater than or equal to half of the grating pitch of the movable scale 24. Furthermore, the correction circuit 35 forms a Lissajous figure on the monitor with a period of at least a half period of the signals $I_A$, $I_B$ output from the signal generation circuit 34 and performs a correction that eliminates any phase shift and distortion from the signals $I_A$, $I_B$. Accordingly, the signals $I_A'$, $I_B'$, which are highly reliable once they have undergone correction, can be used as the output signals of the encoder 10. In addition, based on the result signals $I_A'$, $I_B'$, the movement direction of the movable scale 24 can be detected with fine accuracy.

In addition, in the encoder 10 according to the present embodiment, even if the vibrations of the actuator 16 were to stop for some reason, the signal generation circuit 34 could still perform calculations on the photoelectric conversion signals $I_a$, $I_b$, $I_c$, $I_d$. Accordingly, the encoder 10 could continue to output the output signals $I_A'$, $I_B'$, $I_{AB}$. In such a case, for example, a circuit may be provided to the control circuit 30 that continuously monitors the signal $I_{AB}$ and detects any stoppage of the actuator 16, and a signal that reports, for example, the stoppage or status of the actuator 16 may be transmitted externally.

In addition, in the encoder 10 according to the present embodiment, the differentials of the photoelectric conversion signals $I_a$, $I_c$ and of the photoelectric conversion signals $I_b$, $I_d$, whose phases differ by 180°, serve as the signal $I_A$ and the signal $I_B$, respectively. Thereby, it is possible to prevent any noise in the photoelectric conversion signals $I_a$, $I_b$, $I_c$, $I_d$ from mixing into the signals $I_A$, $I_B$, $I_{AB}$.

Furthermore, in the present embodiment, the light receiving device 26 comprises the four light receiving parts 26a-26d, which output four signals whose phases differ one to the next by 90°, but the present invention is not limited thereto; for example, two signals with different phases may be output or a signal that is the product of these two signals may be output. In this case, too, detecting the position of the movable scale 24 can achieve substantially the same effect as doubling the degree of modulation.

In addition, the layout of the light receiving parts 26a-26d formed in the light receiving device 26 is but one example thereof, and the present invention is not limited thereto. In essence, any layout may be adopted as long as the four signals of different phases are output using the light receiving device 26 in combination with the illumination system.

In addition, the present embodiment explained the encoder 10 that comprises an optical system that comprises the collimating lens 18, the index scale 20, and the reflecting mirrors 22A, 22B, but the present invention is not limited thereto; for example, instead of using the index scale 20 to diffract the illumination light, a beam splitter may be used, or a diffraction grating may be used instead of the reflecting mirrors 22A, 22B. In essence, any optical system may be adopted as long as it can generate multiple signals of different phases from the entering illumination light.

In addition, with the present embodiment, the light source 12 is periodically vibrated to modulate the illumination light, but the present invention is not limited thereto; for example, the index scale 20 may be periodically vibrated.

In addition, the present invention can also be adapted to an encoder that, without vibrating the light source 12, periodically vibrates the collimating lens 18 along the X axis. In addition, by disposing an acoustooptic modulator (AOM) or an electro-optic modulator (EOM) between the light source 12 and the collimating lens 18, the present invention can also be adapted to an encoder that periodically vibrates the illumination light in the travel direction or at some transit position.

In addition, the present embodiment explained a case wherein the movable scale 24 is moved, but the present invention is not limited thereto; for example, a portion other than the movable scale 24 may be moved. In essence, any configuration may be adopted as long as the movable scale 24 and another optical member are moved relative to one another.

In addition, the present embodiment explained a case wherein the index scale 20 and the movable scale 24 each have a phase grating, but the present invention is not limited thereto; for example, a scale may be adopted that has an amplitude type diffraction grating (i.e., a contrast type diffraction grating). In addition, a configuration may be adopted wherein a scale that has an amplitude type phase grating and a scale that has a phase grating are used in combination.

In addition, in the present embodiment, $\pm 1^{st}$ order diffracted lights are used as the measurement light, but the present invention is not limited thereto; for example, the interference lights of diffracted lights of a high order may be used as the measurement light, or the interference lights of diffracted lights of different orders, such as the $0^{th}$ order and the nth order (or the $-n^{th}$ order), or the $+n^{th}$ order and the $+(m + n)^{th}$ order, may be used as the measurement light.

In addition, the encoder 10 according to the present embodiment is a linear encoder that detects the position of the moving body in the axial directions of one axis, but the present invention can also be adapted to a rotary encoder that detects the amount of rotation of a rotary body.

**INDUSTRIAL APPLICABILITY**

As explained above, the encoder of the present invention is adapted to the optical detection of the position of a moving body.

**Claims**

1. An encoder that detects positional information of a moving body using the interference of a modulated illumination light, comprising:

   a scale that is fixed to the moving body and has a pattern arrayed in the movement directions of the moving body;
   an optical system that radiates the illumination light to the scale and generates an emergent light that includes at least two different pieces of phase information;
   a signal generation apparatus that receives the emergent light and generates signals corresponding to the phase information; and
   an output apparatus that outputs the positional information regarding the moving body based on the signals generated by the signal generation apparatus.

2. The encoder according to claim 1, further comprising:

a processing apparatus that adjusts the degree of modulation of the illumination light based on the result of at least one arithmetic calculation, selected from the group consisting of addition, subtraction, multiplication, and division, that is performed on the signals generated by the signal generation apparatus.

3. The encoder according to one of claims 1 and 2, wherein

even when the modulation of the illumination light is stopped, the output apparatus outputs the positional information regarding the moving body based on the signals generated by the signal generation apparatus.

4. The encoder according to any one of claims 1 to 3, further comprising:

an alarm detection apparatus that outputs an alarm signal externally when the modulation of the illumination light is stopped.

# Fig. 1

30

31 — LIGHT SOURCE DRIVE CIRCUIT

32 — ACTUATOR DRIVE CIRCUIT

33 — MODULATION DEGREE CONTROL CIRCUIT

34 — SIGNAL GENERATION CIRCUIT

36 — ARITHMETIC CIRCUIT

35 — CORRECTION CIRCUIT

$I_A$、$I_B$

$I_{AB}$

$I_A'$、$I_B'$

$I_{a \sim b}$

16

12

10

18

20

22A

22B

24

26

26a

26b

26c

26d

Z
Y
X

## INTERNATIONAL SEARCH REPORT

| International application No. |
| --- |
| PCT/JP2007/071701 |

A.   CLASSIFICATION OF SUBJECT MATTER
*G01D5/38*(2006.01)i

According to International Patent Classification (IPC) or to both national classification and IPC

B.   FIELDS SEARCHED

Minimum documentation searched (classification system followed by classification symbols)
G01D5/38

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2007 |
| Kokai Jitsuyo Shinan Koho | 1971–2007 | Toroku Jitsuyo Shinan Koho | 1994–2007 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X | JP 2006-170899 A  (Sendai Nikon Corp.),<br>29 June, 2006 (29.06.06),<br>Full text; all drawings<br>(Family: none) | 1-4 |
| A | WO 2006/64801 A1  (Nikon Corp.),<br>22 June, 2006 (22.06.06),<br>Full text; all drawings<br>(Family: none) | 1-4 |
| A | JP 2005-326231 A  (Sendai Nikon Corp.),<br>24 November, 2005 (24.11.05),<br>Full text; all drawings<br>(Family: none) | 1-4 |

☐   Further documents are listed in the continuation of Box C.        ☐   See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 December, 2007 (03.12.07) | 18 December, 2007 (18.12.07) |

| Name and mailing address of the ISA/<br>Japanese Patent Office | Authorized officer |
| --- | --- |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6639686 B